Europäisches Patentamt

European Patent Office

Office européen des brevets

(11) Veröffentlichungsnummer: **0 291 623**
**A1**

(12) # EUROPÄISCHE PATENTANMELDUNG

(21) Anmeldenummer: **87890103.2**

(22) Anmeldetag: **18.05.87**

(51) Int. Cl.⁴: **B23Q 1/24**

(43) Veröffentlichungstag der Anmeldung:
**23.11.88 Patentblatt 88/47**

(84) Benannte Vertragsstaaten:
**AT DE FR GB IT SE**

(71) Anmelder: **GFM Gesellschaft für Fertigungstechnik und Maschinenbau Gesellschaft m.b.H.**
**Ennserstrasse 14**
**A-4403 Steyr(AT)**

(72) Erfinder: **Blaimschein, Gottfried, Dipl.-Ing.**
**Arnhalmweg 33**
**A-4407 Steyr(AT)**

(74) Vertreter: **Hübscher, Heiner, Dipl.-Ing. et al**
**Patentanwälte Dipl.-Ing. Gerhard Hübscher,**
**Dipl.-Ing. Helmut Hübscher Dipl.-Ing. Heiner**
**Hübscher Spittelwiese 7**
**A-4020 Linz(AT)**

(54) Spannvorrichtung für spanend zu bearbeitende Werkstücke und Verfahren zum Spannen eines Werkstückes mittels dieser Spannvorrichtung.

(57) Eine Spannvorrichtung (3) für spanend zu bearbeitende Werkstücke (2) weist wenigstens zwei einzeln verstellbare und vorzugsweise festklemmbare Spannbacken (6, 7) auf.

Um ein genaues Spannen eines Werkstückes (2) zu ermöglichen, auftretenden Fehlerquellen auszuschalten, sowohl zentrierend als auch kompensierend spannen und verschiedenste Spannverfahren durchführen zu können, ist zumindest einer Spannbacke (6; 7) ein Weggeber (11; 12) zugeordnet, der die jeweilige Lage der zugehörigen Spannbacke (6; 7) erfaßt und einer Steuerungseinrichtung (13) eingibt, über welche Steuerungseinrichtung (13) die Vestellantriebe (8, 9) der Spannbacken (6, 7) im Sinne der aus den eingegebenen Werten entsprechend den eingespeicherten Steuerprogrammen ermittelten Verstellwege der Spannbacken (6,7) ansteuerbar sind.

## Spannvorrichtung für spanend zu bearbeitende Werkstücke und Verfahren zum Spannen eines Werkstückes mittels dieser Spannvorrichtung

Die Erfindung bezieht sich auf eine Spannvorrichtung für spanend zu bearbeitende Werkstücke, mit wenigstens zwei einzeln verstellbaren und vorzugsweise festklemmbaren Spannbacken, sowie auf ein Verfahren zum Spannen eines Werkstückes mittels einer solchen Spannvorrichtung.

Spannvorrichtungen, beispielsweise Lünetten oder Drehantriebe für Werkzeugmaschinen,gibt es in den verschiedensten Ausführungen, wobei gemeinsam verstellbare Spannbacken ein zentrierendes Spannen und einzeln verstellbare Spannbacken ein Exzentrizitäten belassendes, kompensierendes Spannen ermöglichen. Bisher ist nun der wahlweise Einsatz ein und derselben Spannvorrichtung für ein zentrierendes oder kompensierendes Spannen nicht möglich und auch eine Überwachung des Spannvorganges hinsichtlich einer spanndruckbedingten Werkstückverlagerung, einer Verstellgenauigkeit der Spannbacken, einer Anfahr- oder Setzbewegung u.dgl. bleibt ausgeschlossen. Wie die DE 30 31 029 C3 zeigt, ist es zwar schon bekannt, eine der Spannbacken einer Lünette mit einer Anzeigeeinrichtung zum Registrieren des Berührungspunktes zwischen Backe und Werkstück aus zustatten und ein Wegmeßgerät zum Ablesen des Verstellweges der Backe vorzusehen, doch läßt sich hier die Spannbacke lediglich vom angezeigten Berührungspunkt um ein rechnerisch oder empirisch ermitteltes Maß weiterbewegen, um einen Werkstückdurchhang auszugleichen, was aber wegen der auftretenden inneren Setzbewegungen der Spannvorrichtung, der aufgrund von lokalen Oberflächenunebenheiten Unbestimmtheit des Berührungspunktes, der nicht zu berücksichtigenden Reibungsverhältnisse bei der Spannbackenverstellung u.dgl. für gesteigerte Genauigkeitsanforderungen nicht befriedigt. Um die Reibungsverhältnisse und die Setzbewegungen der Spannbacken zu berücksichtigen, wurde auch schon vorgeschlagen, beim Anstellen der Spannbacken am Werkstück eine der Backen vor der Spanndruckbeaufschlagung der anderen um ein bestimmtes Übermaß vorzuschieben und festzuklemmen, damit dann nach Spanndruckbeaufschlagung der anderen Spannbacken die erwartete Setzbewegung zur gewünschten Spannposition führt. Ein solches sogenanntes Überheben beschränkt sich aber auf ein näherungsweises Abstimmen der Spannvorrichtung und erlaubt kein exaktes Spannen. Dazu kommt noch, daß das Anfahren und Anstellen der Spannbacken vor allem bei unterschiedlich dimensionierten Werkstücken wegen der Notwendigkeit des auf die größte Werkstückdimension ausgelegten Abbremsens der Verstellantriebe aus dem Eilgang in den Schleichgang mit beträchtlichen Nebenzeiten verbunden ist.

Der Erfindung liegt daher die Aufgabe zugrunde, diese Mängel zu beseitigen und eine Spannvorrichtung der eingangs geschilderten Art zu schaffen, die mit verhältnismäßig einfachem Bauaufwand ein exaktes Spannen der Werkstücke erlaubt, sich sowohl zum kompensierenden als auch zum zentrierenden Spannen bestens eignet und ein Ausschalten verschiedenster Fehlerquellen beim Spannen gewährleistet. Darüber hinaus sollen vorteilhafte Verfahren zum Spannen eines Werkstückes mittels dieser Spannvorrichtung angegeben werden.

Die Erfindung löst diese Aufgabe dadurch, daß zumindest einer Spannbacke ein Weggeber zugeordnet ist, der die jeweilige Lage der zugehörigen Spannbacke erfaßt und einer Steuerungseinrichtung eingibt, über welche Steuerungseinrichtung die Verstellantriebe der Spannbacken im Sinne der aus den eingegebenen Werten entsprechend den eingespeicherten Steuerprogrammen ermittelten Verstellwege der Spannbacken ansteuerbar sind. Durch das Zusammenspiel von Steuerungseinrichtung und Weggebern kommt es zu einer selbstkontrollierenden Spannvorrichtung, die je nach eingespeicherten Steuerprogrammen zusätzlich zum eigentlichen zentrierenden oder kompensierenden Spannen auch andere mit der Lage der Spannbacken und dadurch mit der Ist- oder Sollage des Werkstückes zusammenhängende Funktionen, beispielsweise das Eliminieren von Fehlerquellen, das Bestimmen des Werkstückdurchhanges, das Ausrichten und Zentrieren von Werkzeugen und anderen Spanneinrichtungen, das Erkennen von Werkstücktypen, das Kontrollieren von Werkstückpositionen u.dgl. erfüllen kann.

Um durch ein Spannen des Werkstückes Abplattungen an der Werkstückoberfläche ausgleichen zu können, läßt sich das Werkstück nachsetzend spannen, wozu die Spannbacken zuerst an das Werkstück angestellt werden und dann die eine Backe, die Abstützbacke, festgeklemmt und die andere, die Klemmbacke, mit dem Spanndruck beaufschlagt wird, so daß durch die bleibende Druckbeaufschlagung unabhängig von etwaigen Abplattungen auch die erforderliche Spannkraft erhalten bleibt. Erfindungsgemäß wird nun bei einem solchen Verfahren die Lage der Abstützbacke vor und nach der durch die Spanndruckbeaufschlagung der Klemmbacke bedingten Setzbewegung der Steuerungseinrichtung eingegeben, die durch ein Ansteuern des Verstellantriebes der Abstützbacke im Maße des erfaßten Lageunterschiedes die Abstützbacke gegen den Spanndruck der Klemmbacke bis zur Ausgangslage zurückversetzt, wobei die Klemmung der Abstützbacke während des Zurücksetzens gelöst und dann wieder aufgebracht wird. Durch das Erfassen der tatsächlich auftretenden Setzbewegung der Abstützbacke läßt sich daher auf einfache Weise die Spannstelle genau in ihre ursprüngliche Position verlegen und unabhängig von den inneren Reibungs- und Dehnungsverhältnissen u.dgl. ein exaktes kompensierendes Spannen erreichen.

Bei hohen Spannkräften kann der erfaßte Lageunterschied der Abstützbacke durch die Steuerungseinrichtung um einen vorgegebenen Korrekturwert erweitert werden, so daß während einer Bearbeitung auftretende Abplattungen des Werkstückes auf empirische Weise sogar zentrierend auszugleichen sind.

Besonders vorteilhaft ist es ferner, wenn gleichzeitig mit dem Erfassen der Setzbewegung der Abstützbacke auch die Nachfolgebewegung der Klemmbacke unter der Druckbeaufschlagung erfaßt und der Steuerungseinrichtung eingegeben wird, die beide Bewegungsabläufe miteinander vergleicht und bei Fehlen von Abweichungen bestimmter Größe die Verstellantriebe dementsprechend und vorzugsweise unter Berücksichtigung eines errechneten und/oder empirisch ermittelten Abplattungswertes ansteuert, bei Auftreten von solchen Abweichungen jedoch den Spannvorgang unterbricht und wiederholt. Ein solcher Vergleich zwischen Setzbewegung und Nachfolgebewegung erlaubt es, das Vorhandensein von klein flächigen Krusten od.dgl. beim Aufbringen des Spanndruckes einseitig nachgebenden Oberflächenunebenheiten zu erkennen und die dadurch auftretende Gefahr einer Werkstückverlagerung zu vermeiden. Kommt es nämlich im Vergleich zu den üblichen Bewegungsabläufen zu größeren Abweichungen, gilt das als Zeichen solcher Krusten, die beim erstmaligen Aufbringen des Spanndruckes beseitigt werden. Wird nach diesem Beseitigen der Krusten der Spannvorgang wiederholt, gibt es keine unerwünschten Einflüsse durch die bereits beseitigten Krusten mehr und es kommt zum exakten Werkstückspannen. Zusätzlich läßt sich dabei die durch die Spanndruckbelastung des Werkstückes selbst unvermeidbare Abplattung mit vorgegebenen Korrekturwerten ausgleichen.

Gemäß einer günstigen Weiterentwicklung der Erfindung werden der Steuerungseinrichtung bestimmten Backenlagen zugeordnete Programmpunkte eingespeichert und das Steuerprogramm zum Ansteuern der Verstellantriebe ist vom Vergleich der Programmpunkte mit den von den Weggebern erfaßten Backenlagen abhängig. Mit Hilfe dieser Programmpunkte lassen sich beispielsweise die Stellantriebe zum gewünschten Zeitpunkt vom Eil-auf Schleichgang umschalten und dadurch die Nebenzeiten wesentlich verkürzen. Außerdem kann durch diese Programmpunkte eine Signalgabe für den Folgeablauf des eigentlichen Spannvorganges erreicht werden, und es ist auch möglich, ganz bestimmte vorgegebene Verstell-und Spannbewegungen aufgrund des durch die Programmpunkte und die Backenlagen vollziehbaren Soll-Istwertvergleiches anzusteuern.

Erfindungsgemäß kann dabei die Steuerungseinrichtung durch den Vergleich zwischen vorgegebenen Programmpunkten und tatsächlichen Backenlagen zur Kontrolle der Werkstückposition und/oder zur Erkennung von Werkstücktypen verwendet werden, da durch das Anstellen der Spannbacken am Werkstück die vorhandene Werk stücklage oder der Werkstücktyp erfaßtbar ist und die Steuerungseinrichtung aus dem Vergleich mit den Programmpunkten Schlüsse zur gewünschten Erkennung ziehen kann.

Gemäß einer besonders vorteilhaften Ausgestaltung der Erfindung werden der Steuerungseinrichtung die Anstellagen der Spannbacken für zwei um 180° winkelverdrehte Werkstückpositionen eingegeben, welche Steuerungseinrichtung diese Anstellagen mit vorgegebenen Mittenlagen zu einer Bestimmung des Werkstückdurchhanges verknüpft und vorzugsweise die Verstellantriebe gleich im Sinne eines Durchhangausgleiches ansteuert. Durch das Erfassen der Spannbackenlagen für zwei um 180° winkelverdrehte Werkstückpositionen kann der gewichtsbedingte Durchhang ermittelt und durch entsprechende Ansteuerung der Verstellantriebe dieser Durchhang auch sofort beim Spannen mit einem geeigneten Anheben eliminiert werden.

Um zentrierend zu spannen, ist es möglich, der Steuerungseinrichtung entsprechende Programmpunkte vorzugeben. Günstig ist es aber, wenn die Spannbacken am Spannfutter eines feststehenden Spannstockes der zugehörenden Werkzeugmaschine angesetzt und die über die Weggeber erfaßten Backenlagen der Steuerungseinrichtung als Referenzpunkte für ein Steuerprogramm zum zentrierenden Spannen eingegeben werden. Dadurch wird beim Spannen das Werkstück exakt konzentrisch zum Spannfutter des Spannstockes gehalten und für eine tatsächlich zur Maschinenachse koaxiale Werkstücklage gesorgt.

Da sich die Spannbacken genau symmetrisch zur Maschinenachse ein- und verstellen lassen, ist es auch möglich, die Spannbacken zum Zentrieren zusätzlicher Spanneinrichtungen und/oder Bearbeitungseinrichtungen zu verwenden, so daß eine Abstimmung der gesamten Maschine einheitlich auf die von der Spannvorrichtung festgelegten Referenzpunkte erreichbar ist.

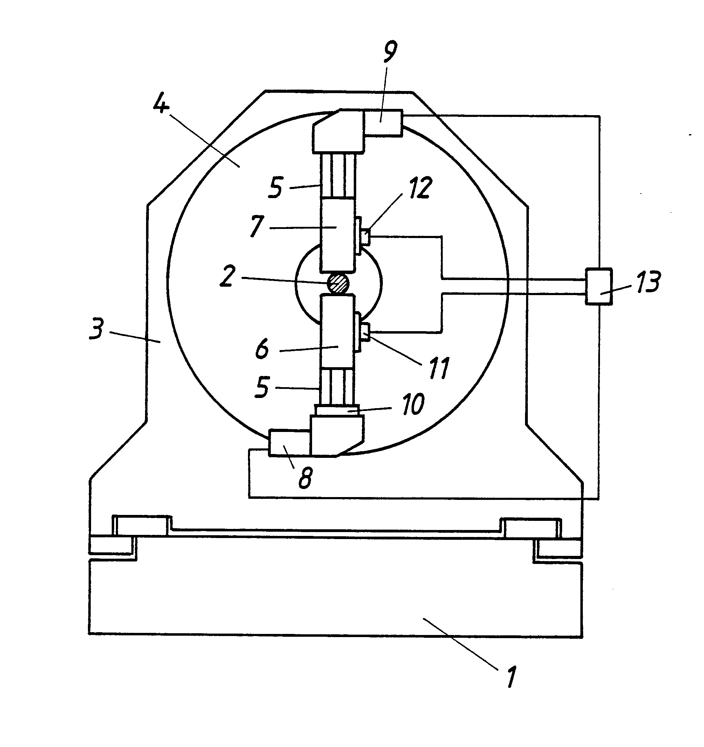

In der Zeichnung ist der Erfindungsgegenstand beispielsweise anhand einer schematischen Stirnansicht einer erfindungsgemäßen Spannvorrichtung veranschaulicht.

Auf einem Maschinenbett 1 einer nicht weiter dargestellten Werkzeugmaschine zur spanenden Bearbeitung eines Werkstückes 2 ist eine längsverfahrbare Spannvorrichtung 3 zum Spannen des Werkstückes 2 aufgebaut. Die Spannvorrichtung 3 weist einen Träger 4 mit Aufnahmen 5 für zwei oder auch mehr einzeln verstellbare Spannbacken 6, 7 auf, wobei als Verstellantriebe 8, 9 geeignete mechanische oder hydraulische Antriebe dienen, die einerseits eine genaue Verstellung der Spannbacken 6, 7 und anderseits das Aufbringen eines erforderlichen Spanndruckes erlauben.

Zum Spannen des Werkstückes 2 werden zuerst beide Spannbacken 6, 7 an das Werkstück 2 herangefahren und angestellt, worauf die eine Spannbacke 6,die Abstützbacke, über eine Klemmeinrichtung 10 fixiert und die andere Spannbacke 7, die Klemmbacke, über den zugehörigen Vestellantrieb 9 mit dem Spanndruck beaufschlagt wird, so daß das Werkstück 2 unabhängig von Abplattungen od.dgl. mit einer gleichbleibenden Spannkraft zwischen den Spannbacken 6, 7 in einer bestimmten Position zu spannen ist. Um diese Position exakt festlegen, verschiedene Fehlerquellen beim Spannvorgang ausschalten und auch beliebige Spannverfahren durchführen zu können, ist jeder Spannbacke 6, 7 ein Weggeber 11, 12 zugeordnet, welche Weggeber 11, 12 die jeweiligen Spannbackenlagen erfassen und einer Steuerungseinrichtung 13 eingeben, die ihrerseits entsprechend den eingespeicherten Steuerprogrammen die Verstellantriebe 8, 9 der Spannbacken 6, 7 in Abhängigkeit von den eingegebenen Werten der Spannbackenlagen ansteuert. Dieses Zusammenspiel zwischen Weggebern 11, 12 und Steuerungseinrichtung 13 führt zu einem jederzeit überwachbaren und entsprechend den Steuerprogrammen in gewünschter Weise beeinflußbaren Spannvorgang, so daß sich für die Spannvorrichtung 3 ein weiter Anwendungsbereich öffnet und die Spannvorrichtung 3 bzw. deren Spannbacken 6, 7 nicht nur zum kompensierenden und zentrierenden Spannen von Werkstücken 2 eingesetzt werden kann, sondern sich auch zur Korrektur von Setzbewegungen, Abplattungseinflüssen oder anderen Fehlerquellen, zur Durchhangbestimmung des Werkstückes 2, zur Erkennung von Werkstücklagen und Werkstücktypen und sogar zur Justierung von zusätzlichen Spanneinrichtungen und von Bearbeitungsaggregaten der Werkzeugmaschine eignen.

## Ansprüche

1. Spannvorrichtung (3) für spanend zu bearbeitende Werkstücke (2), mit wenigstens zwei einzeln verstellbaren und vorzugsweise festklemmbaren Spannbacken (6, 7), dadurch gekennzeichnet, daß zumindest einer Spannbacke (6; 7) ein Weggeber (11; 12) zugeordnet ist, der die jeweilige Lage der zugehörigen Spannbacke (6; 7) erfaßt und einer Steuerungseinrichtung (13) eingibt, über welche Steuerungseinrichtung (13) die Verstellantriebe (8, 9) der Spannbacken (6, 7) im Sinne der aus den eingegebenen Werten entsprechend den eingespeicherten Steuerprogrammen ermittelten Verstellwege der Spannbacken (6, 7) ansteuerbar sind.

2. Verfahren zum Spannen eines Werkstückes mittels einer Spannvorrichtung nach Anspruch 1, wobei die Spannbacken zuerst an das Werkstück angestellt werden und dann die eine Backe, die Abstützbacke, festgeklemmt und die andere, die Klemmbacke, mit dem Spanndruck beaufschlagt wird, dadurch gekennzeichnet, daß die Lage der Abstützbacke vor und nach der durch die Spanndruckbeaufschlagung der Klemmbacke bedingten Setzbewegung der Steuerungseinrichtung eingegeben wird, die durch ein Ansteuern des Verstellantriebes der Abstützbacke im Maße des erfaßten Lageunterschiedes die Abstützbacke gegen den Spanndruck der Klemmbacke bis zur Ausgangslage zurückversetzt, wobei die Klemmung der Abstützbacke während des Zurücksetzens gelöst und dann wieder aufgebracht wird.

3. Verfahren nach Anspruch 2, dadurch gekennzeichnet, daß der erfaßte Lageunterschied der Abstützbacke durch die Steuerungseinrichtung um einen vorgegebenen Korrekturwert erweitert wird.

4. Verfahren nach Anspruch 2, dadurch gekennzeichnet, daß gleichzeitig mit dem Erfassen der Setzbewegung der Abstützbacke auch die Nachfolgebewegung der Klemmbacke unter der Druckbeaufschlagung erfaßt und der Steuerungseinrichtung eingegeben wird, die beide Bewegungsabläufe miteinander vergleicht und bei Fehlen von Abweichungen bestimmter Größe die Verstellantriebe dementsprechend und vorzugsweise unter Berücksichtigung eines errechneten und/oder empirisch ermittelten Abplattungswertes ansteuert, bei Auftreten von solchen Abweichungen jedoch den Spannvorgang unterbricht und wiederholt.

5. Verfahren nach Anspruch 2, dadurch gekennzeichnet, daß der Steuerungseinrichtung bestimmten Backenlagen zugeordnete Programmpunkte eingespeichert werden und das Steuerprogramm zum Ansteuern der Verstellantriebe vom Vergleich der Programmpunkte mit den von den Weggebern erfaßten Backenlagen abhängig ist.

6. Verfahren nach Anspruch 5, dadurch gekennzeichnet, daß die Steuerungseinrichtung durch den Vergleich zwischen vorgegebenen Programmpunkten und tatsächlichen Backenlagen zur Kontrolle der Werkstückposition und/oder zur Erkennung von Werkstücktypen verwendet wird.

7. Verfahren nach Anspruch 2, dadurch gekennzeichnet, daß der Steuerungseinrichtung die Anstellagen der Spannbacken für zwei um 180° winkelverdrehte Werkstückpositionen eingegeben werden, welche Steuerungseinrichtung diese Anstellagen mit vorgegebenen Mittenlagen zu einer Bestimmung des Werkstückdurchhanges verknüpft und vorzugsweise die Verstellantriebe gleich im Sinne eines Durchhangausgleiches ansteuert.

8. Verfahren nach Anspruch 2, dadurch gekennzeichnet, daß die Spannbacken am Spannfutter eines feststehenden Spannstockes der zugehörenden Werkzeugmaschine angesetzt und die über die Weggeber erfaßten Backenlagen der Steuerungseinrichtung als Referenzpunkte für ein Steuerprogramm zum zentrierenden Spannen eingegeben werden.

9. Verfahren nach Anspruch 8, dadurch gekennzeichnet, daß die Spannbacken zum Zentrieren zusätzlicher Spanneinrichtungen und/oder Bearbeitungseinrichtungen verwendet werden.

Europäisches
Patentamt

**EUROPÄISCHER RECHERCHENBERICHT**

Nummer der Anmeldung

EP 87 89 0103

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-C-3 031 029  (GFM GESELLSCHAFT FÜR FERTIGUNGSTECHNIK UND MASCHINENBAU) * Anspruch 1; Figuren 1-3 * --- | 1,2 | B 23 Q   1/24 |
| E | EP-A-0 226 005  (SMW SCHNEIDER & WEISSHAUPT) * Ansprüche 1, 4; Seite 3, Zeile 21 - Seite 4, Zeile 21; Figur * --- | 1 | |
| A | EP-A-0 108 857  (RÖHM) * Ansprüche 1, 3-6; Seite 15, Zeile 25 - Seite 16, Zeile 11; Figuren 10, 11 * ----- | 1 | |

RECHERCHIERTE
SACHGEBIETE (Int. Cl.4)

B 23 B    5/00
B 23 C    3/06
B 23 Q    1/24
B 24 B   41/06
B 23 B   31/00

Der vorliegende Recherchenbericht wurde für alle Patentansprüche erstellt

| Recherchenort | Abschlußdatum der Recherche | Prüfer |
|---|---|---|
| BERLIN | 30-12-1987 | MARTIN A E W |